# EUROPEAN PATENT APPLICATION

(11) **EP 4 089 530 A1**
(43) Date of publication of application: **16.11.2022**
(21) Application number: 22156731.6
(22) Date of filing: 15.02.2022
(51) Int. Cl.: G06F 8/65

(54) **INFORMATION PROCESSING PROGRAM, INFORMATION PROCESSING METHOD, AND INFORMATION PROCESSING APPARATUS**

(30) Priority: 11.05.2021 JP 2021080212
(71) Applicant: FUJITSU LIMITED, Kawasaki-shi, Kanagawa 211-8588 (JP)
(72) Inventor: Oikawa, Takanori, Kawasaki-shi, Kanagawa, 211-8588 (JP); Morikawa, Ikuya, Kawasaki-shi, Kanagawa, 211-8588 (JP)
(74) Representative: Hoffmann Eitle

(57) **Abstract**

An information processing program that causes at least one computer to execute a process, the process includes acquiring a log including a path of an execution file of an application installed in a terminal, an execution time of the execution file, and a hash value of the execution file executed at the execution time, from a plurality of terminals; specifying a time-series transition of the hash value of the same execution file based on the log for each of the plurality of terminals; and specifying a revision target of the execution file based on the time-series transition of the hash value between the plurality of terminals.

## Description

### FIELD

The embodiments discussed herein are related to an information processing program, an information processing method, and an information processing apparatus.

### BACKGROUND

An execution file of an application installed in a plurality of terminals in an organization is updated in each terminal by being guided to the entire organization in a case where a patch or the latest version is distributed. However, in a case where there is a terminal in which the update is not performed by the guided patch or latest version, a state in which the application is not improved is continued, so that a grasp of an update state is performed in each terminal. As a method of grasping the update of the execution file in the terminal, there is a method using a hash value. For example, in a case where the hash value is used, a hash value of an execution file of an application in each terminal is acquired, and the acquired hash value is compared with a hash value of an appropriate version to determine whether the execution file is updated in the terminal.

Japanese Laid-open Patent Publication No. 2009-110061 and Japanese Laid-open Patent Publication No. 2019-082816 are disclosed as related art.

### SUMMARY

### [TECHNICAL PROBLEM]

For the plurality of terminals operating in the organization, there is a case where a user of a terminal may install and use an application for business different from an application installed by an administrator. For an execution file of such an application, in a case where the execution file is not a management target by a management apparatus in advance, the management apparatus may not acquire a hash value, and management of a version may not be performed. Even in a case where the user of the terminal registers the application installed for business as the management target, in a case where the installed application has a wide variety, the registration is complicated and troublesome.

According to one aspect, an object is to provide an information processing program, an information processing method, and an information processing apparatus capable of efficiently managing an update status of an application.

### [SOLUTION TO PROBLEM]

According to a first aspect of the embodiments, an information processing program that causes at least one computer to execute a process, the process includes acquiring a log including a path of an execution file of an application installed in a terminal, an execution time of the execution file, and a hash value of the execution file executed at the execution time, from a plurality of terminals; specifying a time-series transition of the hash value of the same execution file based on the log for each of the plurality of terminals; and specifying a revision target of the execution file based on the time-series transition of the hash value between the plurality of terminals.

### [ADVANTAGEOUS EFFECTS OF INVENTION]

According to one embodiment, it is possible to efficiently manage the update status of the application.

### BRIEF DESCRIPTION OF DRAWINGS

FIG. 1 is a diagram illustrating an example of a configuration of an application management system according to an embodiment;
FIG. 2 is a diagram illustrating an example of a configuration of a log stored in a log storage unit;
FIG. 3 is a diagram illustrating an example of a directed-graph indicating a version transition of an execution file executed in a terminal;
FIG. 4 is a diagram illustrating an example of a combined directed-graph;
FIG. 5 is a diagram for explaining node information;
FIG. 6 is a diagram for explaining edge information;
FIG. 7 is a diagram for explaining a method of specifying a terminal in which an execution file of a version that is not permitted to be used is installed;
FIG. 8 is a diagram illustrating an example of a display screen;
FIG. 9 is a diagram for explaining another method of specifying the terminal in which the execution file of the version that is not permitted to be used is installed;
FIGs. 10A to 10C are diagrams for explaining a method of setting a plurality of versions of an execution file as versions permitted to be used;
FIGs. 11A and 11B are diagrams illustrating an example of a combined directed-graph in a case where rollback is performed;
FIGs. 12A and 12B are diagrams for explaining a method in which a node including a hash value of an execution file after rollback is set as an end node;
FIG. 13 is a flowchart illustrating a flow of a process to be executed by a management apparatus;
FIG. 14 is a flowchart illustrating a flow of a process of determining a node before X versions;
FIG. 15 is a flowchart illustrating a flow of a process of determining a node of a rollback version; and
FIG. 16 is a diagram for explaining a hardware configuration of the management apparatus.

### DESCRIPTION OF EMBODIMENTS

Hereinafter, embodiments of an information processing program, an information processing method, and an information processing apparatus disclosed in this application will be described in detail with reference to the drawings. The embodiments are not intended to limit the scope of the present disclosure.

### [Embodiment]

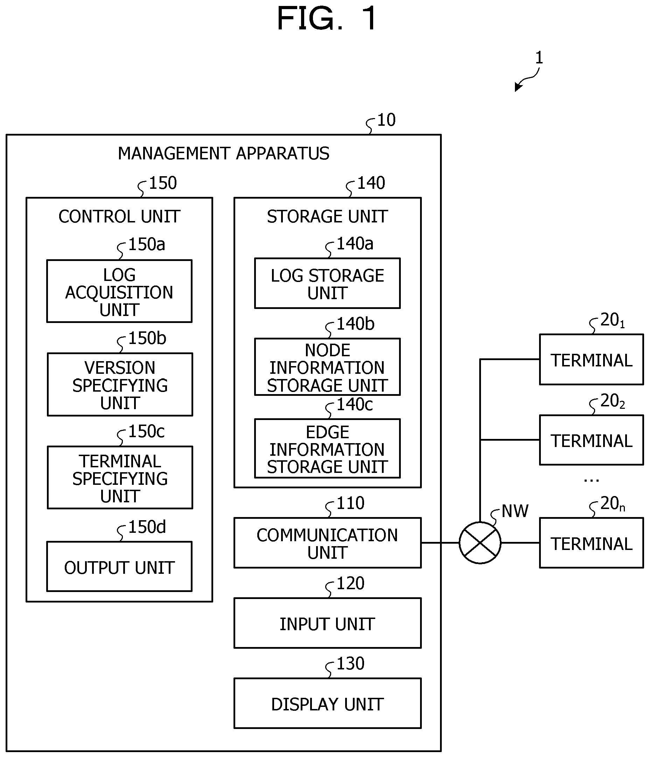

FIG. 1 is a diagram illustrating an example of a configuration of an application management system 1 according to an embodiment of the present disclosure. The application management system 1 includes a management apparatus 10 and terminals 20₁, 20₂, ..., and 20ₙ (n is a natural number equal to or greater than 3). The management apparatus 10 and the terminals 20₁ to 20ₙ are communicably coupled to each other via a network NW.

The terminals 20₁ to 20ₙ are, for example, information processing terminals that may be used by a user in a predetermined organization to perform a business in the organization. Types of terminals 20₁ to 20ₙ are not particularly limited. For example, the terminals 20₁ to 20ₙ may be personal computers (PCs), portable computers, smartphones, personal digital assistants, and other information processing terminals. Hereinafter, when the respective terminals 20₁ to 20ₙ are not desirable to be distinguished from each other, the terminals are collectively referred to as the terminal 20.

Every time an execution file of an installed application is executed, the terminal 20 stores, as a log, an execution date and time of the execution file, a path of the executed execution file, and a hash value of the executed execution file, and transmits the stored log to the management apparatus 10. Instead of transmitting the log every time the execution file is executed, the terminal 20 may transmit the stored log that is not transmitted yet to the management apparatus 10 every time a predetermined time elapses or at a predetermined timing.

The management apparatus 10, which is an example of an information processing apparatus, is an apparatus that manages the execution file of the application installed in the terminal 20. The management apparatus 10 receives a log transmitted from the terminal 20, and stores the log. Based on the stored log, the management apparatus 10 specifies the terminal 20 in which an execution file having a version that is not permitted to be used is installed, among the terminals 20₁ to 20ₙ. The management apparatus 10 may display information indicating the specified terminal 20 over the management apparatus 10. The management apparatus 10 may notify the specified terminal 20 that the execution file having the version that is not permitted to be used is installed, and the terminal 20 that receives this notification may display a prompt to update the execution file. The management apparatus 10 may be configured to store the log transmitted by the terminals 20₁ to 20ₙ in a database or the like separated from the management apparatus 10, and read the log as appropriate.

The network NW couples the management apparatus 10 and the terminal 20 to each other so as to communicate with each other. For example, the network NW may be the Internet, an intranet, a local area network, a wide area network, or a combination of the Internet, the intranet, the local area network, and the wide area network. The network NW may be a wired network, a wireless network, or a combination of the wired network and the wireless network. A part or all of the network NW may be a virtual network.

### (Configuration Example of Management Apparatus 10)

A configuration of the management apparatus 10 will be further described with reference to FIG. 1. The management apparatus 10 includes a communication unit 110, an input unit 120, a display unit 130, a storage unit 140, and a control unit 150.

The communication unit 110 is a functional unit that realizes communication with another apparatus or the like via the network NW. For example, the communication unit 110 is realized by a router, a switch, a modem, a port, and the like.

The input unit 120 is a functional unit that realizes an input of information from the outside to the management apparatus 10. For example, the input unit 120 is realized by a keyboard, a mouse, a touch panel, a microphone, peripheral circuits of the keyboard, the mouse, the touch panel, and the microphone, and the like.

For example, the display unit 130 is a functional unit that displays various types of information output from the control unit 150. For example, the display unit 130 is realized by a liquid crystal display or a touch panel.

The storage unit 140 stores information to be used for processes in the management apparatus 10 and information generated as a result of the process. For example, the storage unit 140 is realized by a semiconductor memory element or a storage device. Examples of the semiconductor memory element include a video random-access memory (VRAM), a random-access memory (RAM), a read-only memory (ROM), a flash memory, or the like. Examples of the storage device include storage devices such as a hard disk and an optical disk.

The control unit 150 controls an operation and a function of the management apparatus 10. The control unit 150 is implemented by a program stored in an internal storage device and is executed by, for example, a central processing unit (CPU), a microprocessor unit (MPU), a graphics processing unit (GPU), or the like by using a random-access memory (RAM) as a work area. The control unit 150 may also be implemented as, for example, an integrated circuit, such as an application-specific integrated circuit (ASIC) or a field-programmable gate array (FPGA).

The control unit 150 includes a log acquisition unit 150a, a version specifying unit 150b, a terminal specifying unit 150c, and an output unit 150d. The log acquisition unit 150a, the version specifying unit 150b, the terminal specifying unit 150c, and the output unit 150d are implemented by an electronic circuit included in a processor, an example of a process executed by the processor, or the like.

The log acquisition unit 150a is a processing unit that acquires a log transmitted from the terminal 20. For example, the log acquisition unit 150a acquires the log transmitted from the terminal 20, and stores the acquired log in the log storage unit 140a. The log acquisition unit 150a acquires the log stored in the log storage unit 140a.

The version specifying unit 150b specifies a time-series transition of a hash value of an execution file having the same file name based on the log acquired by the log acquisition unit 150a, and specifies a revision target of the execution file based on a time-series change of the hash values between a plurality of terminals 20.

Based on the log, the terminal specifying unit 150c specifies the terminal 20 in which the execution file of the revision target is installed.

The output unit 150d causes the display unit 130 to display information indicating the terminal 20 specified by the terminal specifying unit 150e.

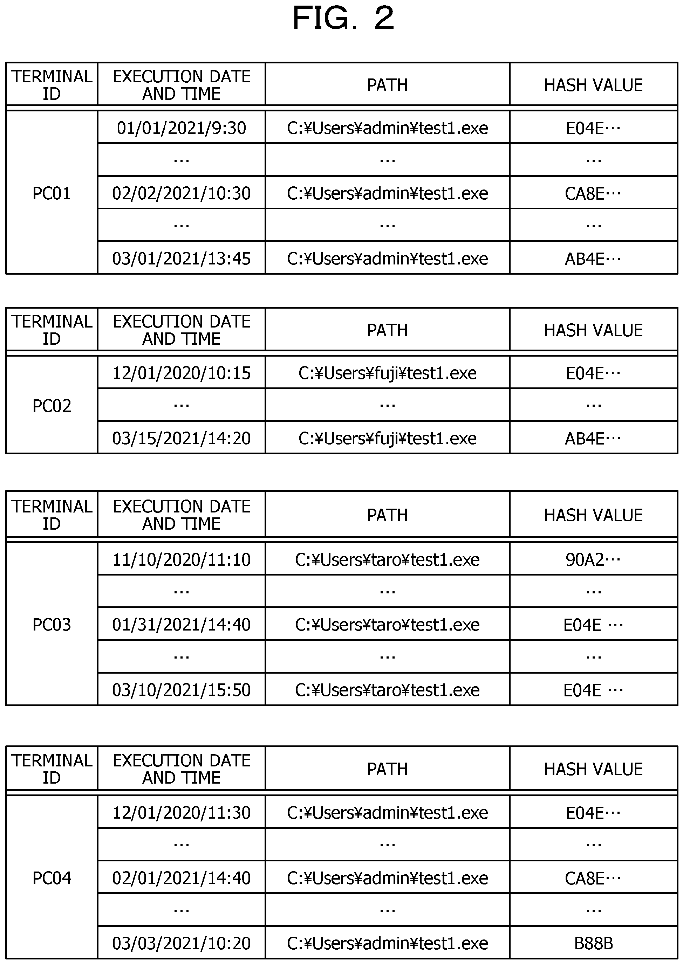

The storage unit 140 includes a log storage unit 140a, a node information storage unit 140b, and an edge information storage unit 140c. The log storage unit 140a stores a log transmitted from the terminal 20 and received by the communication unit 110. FIG. 2 is a diagram illustrating an example of a configuration of a log stored in the log storage unit 140a. The log illustrated in FIG. 2 includes a "terminal ID", an "execution date and time", a "path", and a "hash value".

The "terminal ID" is an identifier (ID) that uniquely specifies any one of the terminals 20₁ to 20ₙ that transmits the log. The "execution date and time" is a date and time when an execution file is executed in the terminal 20 by a user operation. The "path" is information for specifying a storage position of an execution file executed in the terminal 20. The "hash value" is a hash value of an execution file executed in the terminal 20. Since the hash value becomes a different value even in the same execution file when the version is changed by being updated, it may be said that the hash value represents the version of the execution file.

In the example illustrated in FIG. 2, an execution date and time "2021/01/01/9:30", a path "C:\Users\admin\test1.exe", and a hash value "E04E..." are stored in association with a terminal ID "PC01". The example illustrates that, in the terminal 20 specified by the terminal ID "PC01", the user executes an execution file called "test1.exe" having the hash value "E04E..." under a directory of "C:\Users\admin" at 9:30 on January 1, 2021. In the example in FIG. 2, an execution date and time "2021/02/02/10:30", the path "C:\Users\admin\test1.exe", and a hash value "CA8E..." are stored in association with the terminal ID "PC01". The example illustrates that, in the terminal 20 specified by the terminal ID "PC01", the user executes an execution file called "test1.exe" having the hash value of "CA8E..." under the directory of "C:\Users\admin" at 10:30 on February 2, 2021.

In the terminal 20 having the terminal ID of "PC01", the execution file executed at 10:30 on February 2, 2021 has the same execution file name as the execution file executed at 9:30 on January 1, 2021, and has the different hash value. For this reason, the management apparatus 10 knows that a version of the execution file called "test1.exe" is updated.

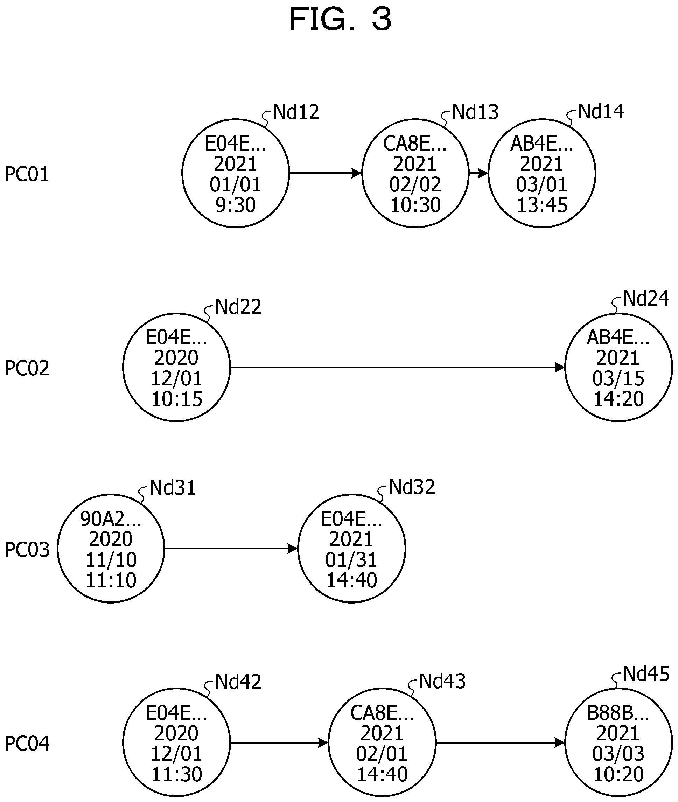

The log stored in the log storage unit 140a is used to generate a directed-graph indicating a version transition of an execution file executed in the terminal 20. An example of a method of generating a directed-graph in the management apparatus 10 is described. FIG. 3 is a diagram illustrating an example of a directed-graph generated by the management apparatus 10 and indicating a version transition of an execution file executed by the terminal 20.

For the log for each terminal 20 stored in the log storage unit 140a, the management apparatus 10 refers to the path, and extracts records having the same execution file. For example, in a case where a terminal ID is "PC01", the management apparatus 10 extracts a record including "test1.exe". Next, the management apparatus 10 extracts a hash value included in the extracted record. For example, in a case where the terminal ID is "PC01", the management apparatus 10 extracts "E04E...", "CA8E...", and "AB4E..." as hash values, from the record including "test1.exe".

Among execution date and times included in the record including the extracted hash value, the management apparatus 10 sets the oldest date and time as a first appearance date and time of the execution file of the extracted hash value, and generates a node including the first appearance date and time and the extracted hash value.

For example, as illustrated in FIG. 3, in a case where the terminal ID is "PC01", for an execution file having a file name of "test1.exe", the management apparatus 10 generates a node Nd12 including "2021/01/01/9:30" as the first appearance date and time, for a version having a hash value of "E04E...". For the execution file having the file name of "test1.exe", the management apparatus 10 generates a node Nd13 including "2021/02/02/10:30" as the first appearance date and time, for a version having the hash value of "CA8E...". For the execution file having the file name of "test1.exe", the management apparatus 10 generates a node Nd14 including "2021/03/01/13:45" as the first appearance date and time, for a version having a hash value of "AB4E...".

The management apparatus 10 sorts the records including "test1.exe" in an order of the execution date and time included in the records, and couples the generated nodes by an edge, in accordance with a change in the hash values included in the sorted records. For example, in a case of a log having the terminal ID of "PC01", in the records including "test1.exe", the hash value changes in an order of "E04E...", "CA8E...", and "AB4E...". For this reason, in accordance with this order, as illustrated in FIG. 3, the management apparatus 10 couples the node Nd12 and the node Nd13 by an edge, and couples the node Nd13 and the node Nd14 by an edge.

As illustrated in FIG. 3, for the terminal 20 having another terminal ID, the management apparatus 10 generates, based on the log, a directed-graph indicating a version transition of an execution file, the execution file having the file name of "test1.exe". As a result, for the terminal 20 having a terminal ID of "PC02", a directed-graph having a node Nd22 including the hash value "E04E..." and a node Nd24 including the hash value "AB4E..." is generated. For the terminal 20 having a terminal ID "PC03", a directed-graph having a node Nd31 including a hash value "90A2..." and a node Nd32 including the hash value "E04E..." is generated. For the terminal 20 having a terminal ID "PC04", a directed-graph is generated that includes a node Nd42 including the hash value "E04E...", a node Nd43 including the hash value "CA8E...", and a node Nd44 including a hash value "B88B...".

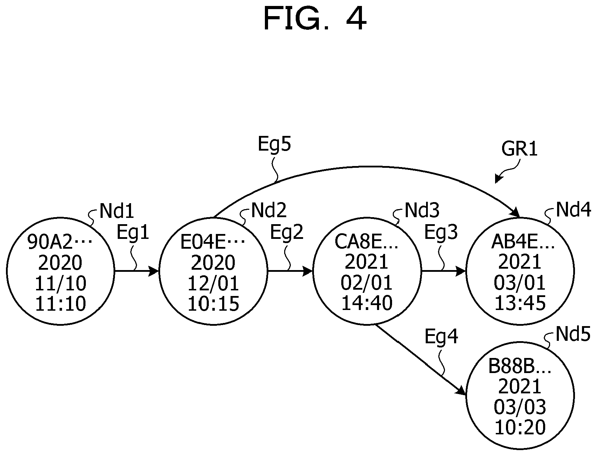

After generating the directed-graph indicating the version transition of the execution file for each terminal 20, the management apparatus 10 combines the generated directed-graphs. FIG. 4 is a diagram illustrating an example of a combined directed-graph GR1 generated by combining the directed-graphs illustrated in FIG. 3.

For example, the management apparatus 10 combines nodes having the same hash value, for the directed-graph generated for each terminal 20, and sets the oldest date and time included in the nodes having the same hash value as a first appearance date and time included in the combined nodes.

For example, in a case where the directed-graphs illustrated in FIG. 3 are combined, for the node having the hash value of "90A2...", a first appearance date and time included in the node Nd31 of a directed-graph of the terminal 20 having the terminal ID of "PC03" is the oldest. For this reason, in the combined directed-graph GR1, for a node Nd1 having the hash value "90A2...", a first appearance date and time "2020/11/10/11:10" included in the node Nd31 is included.

For the nodes Nd12, Nd22, Nd32, and Nd42 having the hash value of "E04E...", a first appearance date and time included in the node Nd22 of the directed-graph of the terminal having the terminal ID of "PC02" is the oldest. For this reason, in the combined directed-graph GR1, for the node Nd2 having the hash value of "E04E...", a first appearance date and time "2020/12/01/10:15" included in the node Nd22 is included.

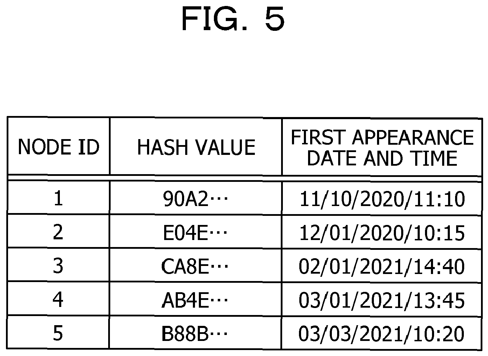

FIG. 5 is a diagram illustrating an example of node information included in each node of the combined directed-graph GR1. The node information of the combined directed-graph GR1 is stored in the node information storage unit 140b. The node information illustrated in FIG. 5 includes a "node ID", a "hash value", and a "first appearance date and time". The "node ID" is an identifier for uniquely identifying the node in the combined directed-graph GR1. The "hash value" is a hash value included in the node of the combined directed-graph GR1. The "first appearance date and time" is a first appearance date and time included in the node of the combined directed-graph GR1.

The management apparatus 10 generates an edge of the combined directed-graph GR1, based on the edges of the directed-graphs before the combination. For example, in a directed-graph of a terminal having the terminal ID of "PC03", there is an edge coupling the node Nd31 having the hash value of "90A2..." and the node Nd32 having the hash value of "E04E...". For this reason, in the same manner as this edge, in the combined directed-graph GR1, the management apparatus 10 generates an edge Eg1 coupling the node Nd1 having the hash value of "90A2..." and the node Nd2 having the hash value of "E04E...".

In the same manner, the management apparatus 10 generates an edge Eg2 based on the edge coupling the node Nd12 and the node Nd13 or an edge coupling the node Nd42 and the node Nd43, and generates an edge Eg3 based on the edge coupling the node Nd13 to the node Nd14. The management apparatus 10 generates an edge Eg4 based on an edge coupling the node Nd43 and the node Nd45, and generates an edge Eg5 based on an edge coupling the node Nd22 and the node Nd24.

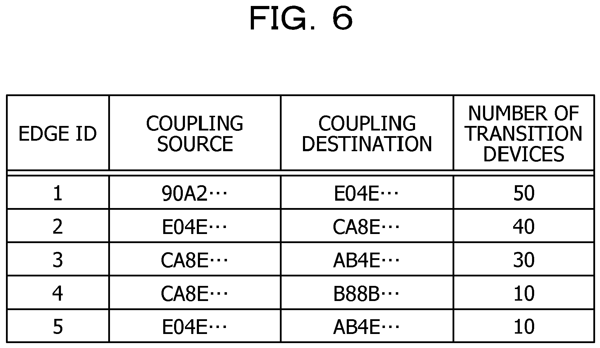

FIG. 6 is a diagram illustrating an example of edge information included in each edge of the combined directed-graph GR1. The edge information of the combined directed-graph GR1 is stored in the edge information storage unit 140c. The edge information includes an "edge ID", a "coupling source", a "coupling destination", and the "number of transition devices". The "edge ID" is an identifier for uniquely identifying an edge. The "coupling source" is a hash value included in a node of a coupling source of the edge. The "coupling destination" is a hash value included in a node of a coupling destination of the edge. The "number of transition devices" is the number of terminals 20 in which an execution file of a version of the hash value included in the node of the coupling source is updated to an execution file of a version of the hash value of the coupling destination. For example, this number is obtained by referring to the directed-graph generated for each terminal 20, and counting the number of terminals 20 that transition from the node including the hash value of the coupling source to the node including the hash value of the coupling destination. The "coupling source" may be set as a node ID of a node of a coupling source of an edge, and "coupling destination" may be set as a node ID of a node of a coupling destination of the edge.

The combined directed-graph GR1 including node information and edge information is used to specify the terminal 20 in which an execution file of a version that is not permitted to be used is installed. A method of causing the management apparatus 10 to specify the terminal 20 in which the execution file of the version that is not permitted to be used is installed will be described.

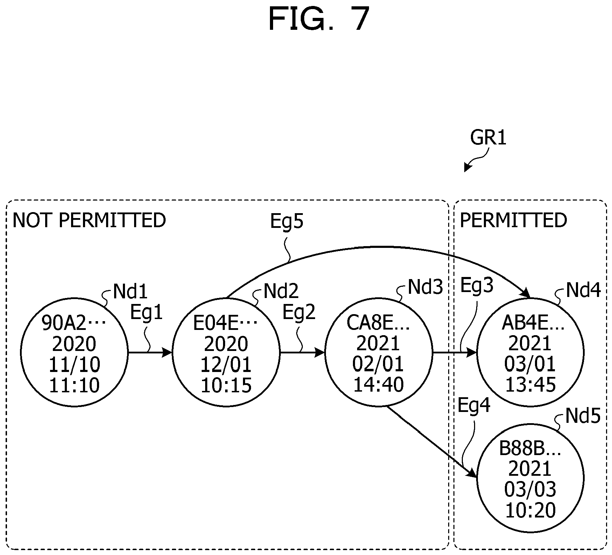

FIG. 7 is a diagram for explaining a method of specifying the terminal 20 in which an execution file of a version that is not permitted to be used is installed. First, the management apparatus 10 specifies a hash value of an execution file of a version permitted to be used. For example, the management apparatus 10 specifies a node having no coupling destination in the combined directed-graph GR1, for example, an end node that is not a coupling source of an edge. For example, the management apparatus 10 specifies a node Nd4 and a node Nd5 having no coupling destination in the combined directed-graph GR1 as the end nodes. Next, the management apparatus 10 sets an execution file having a hash value included in the specified end node as the execution file of the version permitted to be used. The management apparatus 10 sets an execution file of a hash value included in the nodes Nd1, Nd2, and Nd3 other than the specified end node as the execution file of the version that is not permitted to be used. A permitted hash value that is a hash value of the version permitted to be used among hash values included in a node and an unpermitted hash value that is a hash value of the version that is not permitted to be used among the hash values included in the node may be designated by the input unit 120. In this case, the management apparatus 10 sets the execution file having the permitted hash value as the execution file of the version permitted to be used, and sets the execution file having the unpermitted hash value as the execution file of the version that is not permitted to be used. For example, it is assumed that, in the combined directed-graph GR1 in FIG. 7, "AB4E..." and "B88B..." are set as the permitted hash values, and "90A2...", "E04E...", and "CA8E..." are set as the unpermitted hash values. In this case, the management apparatus 10 sets an execution file having a hash value included in the node Nd4 and the node Nd5 as the execution file of the version permitted to be used. The management apparatus 10 sets an execution file of a hash value included in the nodes Nd1, Nd2, and Nd3 as the execution file of the version that is not permitted to be used. As described above, by specifying a time-series transition of the hash value, it is possible to specify the execution file of the version that is not permitted to be used, which is a revision target.

Next, by using the hash value of the execution file of the version that is not permitted to be used, the management apparatus 10 specifies the terminal 20 in which the execution file of the version that is not permitted to be used is installed. For example, the management apparatus 10 specifies a directed-graph in which the hash value included in the nodes Nd1, Nd2, and Nd3 is included in an end node, among the directed-graphs generated for each terminal 20, and specifies the terminal 20 corresponding to the specified directed-graph. For example, the hash value included in the node Nd2 is the hash value "E04E..." of the version of the execution file that is not permitted to be used. Among the directed-graphs generated for each terminal 20 illustrated in FIG. 3, a directed-graph in which the hash value "E04E..." is included in an end node is a directed-graph generated based on log information of the terminal 20 having the terminal ID of "PC03". Accordingly, the management apparatus 10 specifies the terminal 20 having the terminal ID of "PC03" as the terminal 20 in which the version of the execution file that is not permitted to be used is installed. As described above, by generating the combined directed-graph GR1, it is possible to easily specify the terminal 20 in which the execution file of the old version is installed. By generating the directed-graph for each terminal 20, it is possible to know a time-series transition of the hash value of the execution files in the terminal 20, and to easily specify the terminal 20 in which the old version of the execution file is installed, among the plurality of terminals 20₁ to 20ₙ. By setting the hash value included in the node other than the end node as the hash value of the execution file of the version that is not permitted to be used, the terminal 20 in which the execution file of the version other than the latest version is installed may be specified. By using the permitted hash value and the unpermitted hash value, it is possible to specify the terminal 20 in which the execution file of the version that is not permitted to be used is installed.

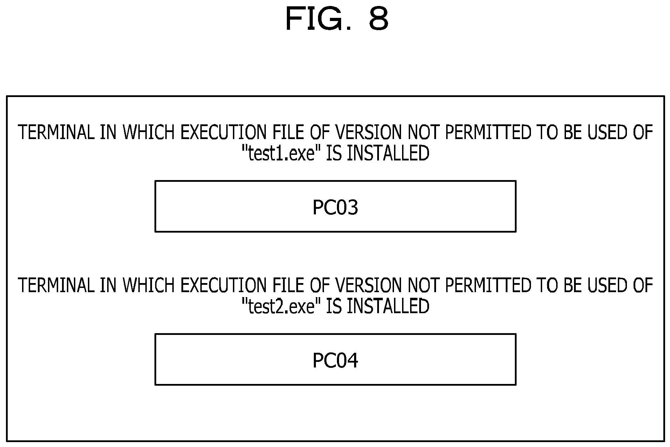

The management apparatus 10 displays information indicating the terminal 20 in which an execution file of a version that is not permitted to be used is installed on the display unit 130. FIG. 8 is a diagram illustrating an example of a display screen. As illustrated in FIG. 8, the management apparatus 10 displays a file name of the execution file installed on the terminal 20 and a terminal ID of the terminal 20 in which the execution file of the version that is not permitted to be used is installed. Since the file name and the terminal ID of the terminal 20 in which the execution file of the version having the file name that is not permitted to be used is installed are displayed, an administrator of applications in an organization may know the terminal 20 in which the version that is not permitted to be used is installed.

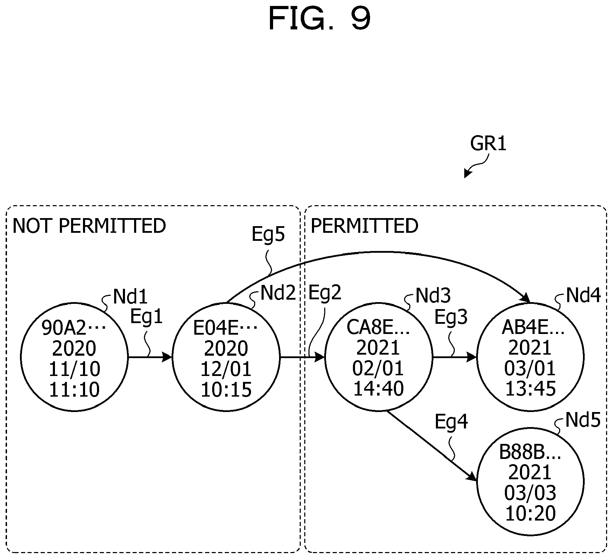

The management apparatus 10 may set, as an execution file of a version permitted to be used, an execution file having a hash value included in a node of which a first appearance date and time is equal to or later than a predetermined date, in the combined directed-graph GR1. For example, it is assumed that an execution file having a hash value included in a node of which the first appearance date and time is equal to or later than February is the execution file of the version permitted to be used. In this case, as illustrated in FIG. 9, the management apparatus 10 sets an execution file having a hash value included in the nodes Nd3, Nd4, and Nd5 as the execution file of the version permitted to be used. The management apparatus 10 sets an execution file of a hash value included in the nodes Nd1 and Nd2 other than these nodes as the execution file of the version that is not permitted to be used. According to this configuration, it is possible to specify the terminal 20 in which an execution file of a version other than the latest version and a version close to the latest version is installed.

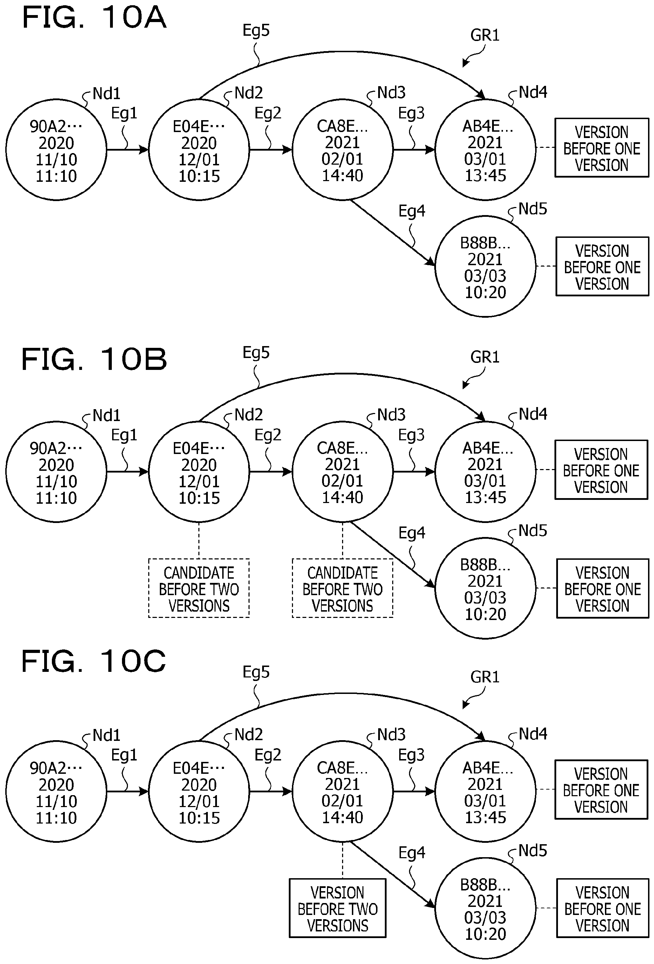

As illustrated in FIGs. 10A to 10C, the management apparatus 10 may set, as an execution file of a version permitted to be used, an execution file of a hash value included in an end node of the combined directed-graph GR1 and a node going up a predetermined number of times from the end node toward a root node. For example, the management apparatus 10 may set a plurality of versions of an execution file as versions permitted to be used. In this case, the management apparatus 10 sets an execution file having a hash value included in a node other than the end node and a node going up a predetermined number of times from the end node, as an execution file of a version that is not permitted to be used. According to this configuration, it is possible to specify the terminal 20 in which an execution file of a version other than the latest version and a version close to the latest version is installed.

FIGs. 10A to 10C are diagrams for explaining a method of setting the plurality of versions of the execution file as the versions permitted to be used. For example, the management apparatus 10 sets the execution file of the hash value of the end node as the latest version, and sets versions going up from the latest version to a version before X versions as the versions permitted to be used. A "version before" of the version before X versions is a word used in a case where uses of versions from the latest version to the version before X versions are permitted, and the latest version is referred to as a version "before one version". A value of X is input by the input unit 120, for example.

According to the example illustrated in FIGs. 10A to 10C, first, the management apparatus 10 determines that the nodes Nd4 and Nd5, which are end nodes as illustrated in FIG. 10A, are nodes "before one version". For example, in a case where X = 2, as illustrated in FIG. 10B, the management apparatus 10 sets the nodes Nd2 and Nd3 having the nodes Nd4 and Nd5 of the nodes "before one version" as coupling destinations, as "candidates before two versions". As illustrated in FIG. 10C, of the nodes Nd2 and Nd3 of the "candidates before two versions", the management apparatus 10 sets the node Nd3 that is not coupled to a node having a new first appearance date and time other than the nodes Nd4 and Nd5 before one version as a node "before two versions". Since the node Nd2 is coupled to the node Nd3 of which the first appearance date and time is later than its own first appearance date and time other than the nodes Nd4 and the Nd5 of the versions before one version, the management apparatus 10 excludes the node Nd2 from the node "before two versions" as illustrated in FIG. 10C.

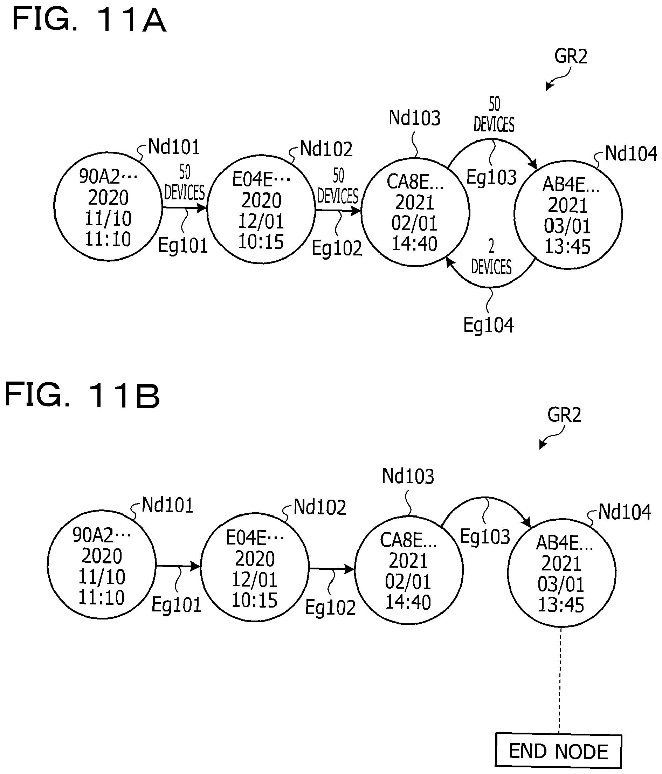

Meanwhile, in a case where an updated execution file has a defect in the terminal 20, a user may perform rollback to return the execution file to an execution file before the update in some cases. FIGs. 11A and 11B are diagrams illustrating an example of a combined directed-graph in a case where rollback is performed. A combined directed-graph GR2 illustrated in FIGs. 11A and 11B includes nodes Nd101 to Nd104 and edges Eg101 to Eg104.

The combined directed-graph GR2 illustrated in FIG. 11A indicates that there are the terminal 20 in which an execution file having the hash value "CA8E..." is updated to an execution file having the hash value "AB4E..." and the terminal 20 in which the execution file having the hash value "AB4E..." is returned to the execution file having the hash value "CA8E...". In this case, as illustrated in FIG. 11A, the node Nd103 and the node Nd104 are coupled by the edge Eg103 directed from the node Nd103 toward the node Nd104 and the edge Eg104 directed from the node Nd104 toward the node Nd103. As described above, in a case where there is no node having no coupling destination in the combined directed-graph GR2, as illustrated in FIG. 11B, the management apparatus 10 may delete the edge Eg104 from the node Nd104 having a new first appearance date and time to the old node Nd103, and may set the node Nd104 as an end node.

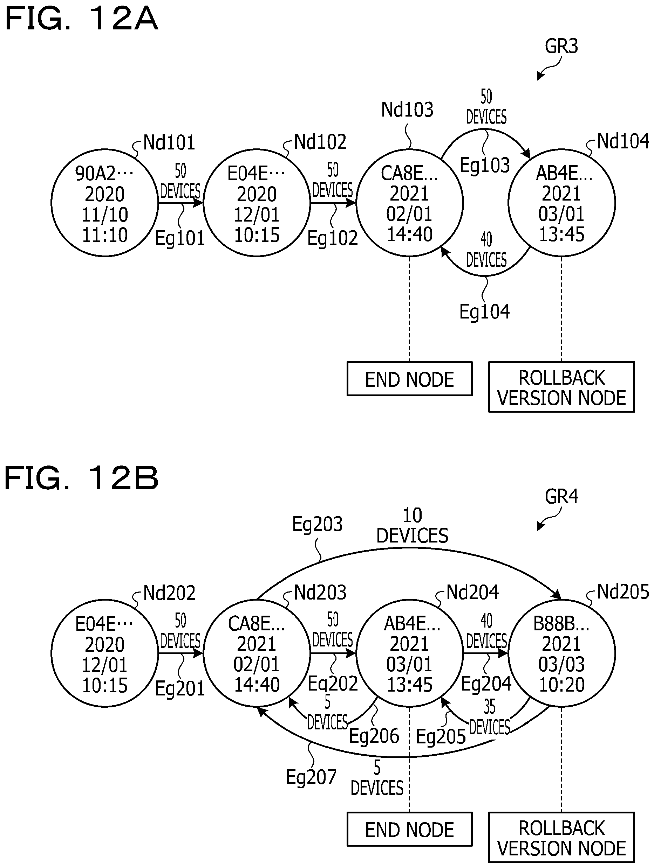

In a case where rollback is performed in the terminal 20, a node including a hash value of an execution file after the rollback may be set as the end node in the combined directed-graph. FIGs. 12A and 12B are diagrams for explaining a method in which a node including a hash value of an execution file after rollback is set as an end node. A combined directed-graph GR3 illustrated in FIG. 12A includes the nodes Nd101 to Nd104 and the edges Eg101 to Eg104. A combined directed-graph GR4 illustrated in FIG. 12B includes nodes Nd202 to Nd205 and edges Eg201 to Eg207.

For example, the management apparatus 10 calculates A/B, for the number B of devices included in an update edge directed toward a node having a new first appearance date and time and the number A of devices included in a rollback edge directed toward a node of which a first appearance date and time is older than this node, in the combined directed-graph. In a case where a calculation result of A/B is equal to or more than a predetermined threshold value, the management apparatus 10 may set the node of a coupling destination of the update edge as a rollback version node, and set the node of a coupling destination of the rollback edge as an end node.

For example, as in a combined directed-graph GR3 illustrated in FIG. 12A, it is assumed that the number B of devices included in the edge Eg103 (update edge) is 50, and the number A of devices included in the edge Eg104 (rollback edge) is 40. In this case, in a case where the threshold value is 0.8, 40/50 = 0.8, so that the management apparatus 10 sets the node Nd104 as a rollback node, and sets the node Nd103 as an end node.

As in the combined directed-graph GR4 illustrated in FIG. 12B, it is assumed that a total number of devices included in the edge Eg203 and the edge Eg204 that are the update edges is 50 and a total number of devices included in the edge Eg205 and the edge Eg207 that are the rollback edges is 40. In this case, in a case where the threshold value is 0.8, B = 40+10, A = 35+5, and 40/50 = 0.8, so that the management apparatus 10 sets the node Nd205 as the rollback node.

As illustrated in FIG. 12B, it is assumed that the number A of devices included in the edge Eg202 that is the update edge is 50, and the number B of devices included in the edge Eg206 that is the rollback edge is 5. In this case, in a case where the threshold value is 0.8, 5/50 = 0.1, so that the management apparatus 10 sets the node Nd204 as the end node without setting the node Nd204 as the rollback node.

As described above, according to the configuration for specifying the rollback version, it is possible to specify the terminal 20 in which the execution file of the version other than the version after the rollback is installed.

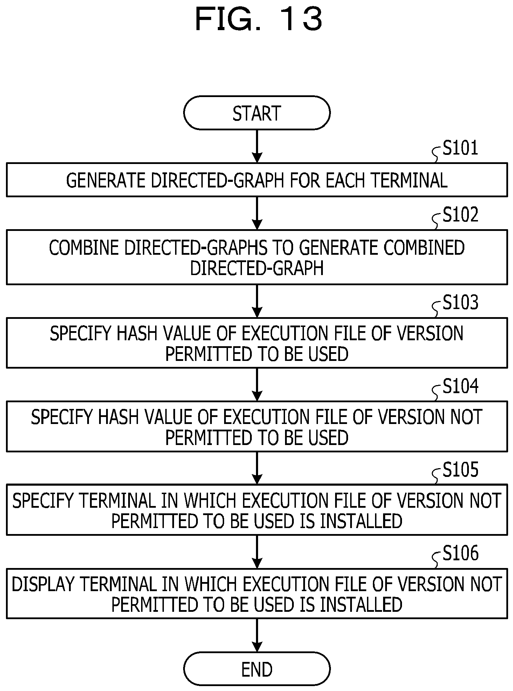

Next, a flow of a process of the management apparatus 10 will be described by using flowcharts. FIG. 13 to 15 are flowcharts illustrating the flow of the process executed by the management apparatus 10.

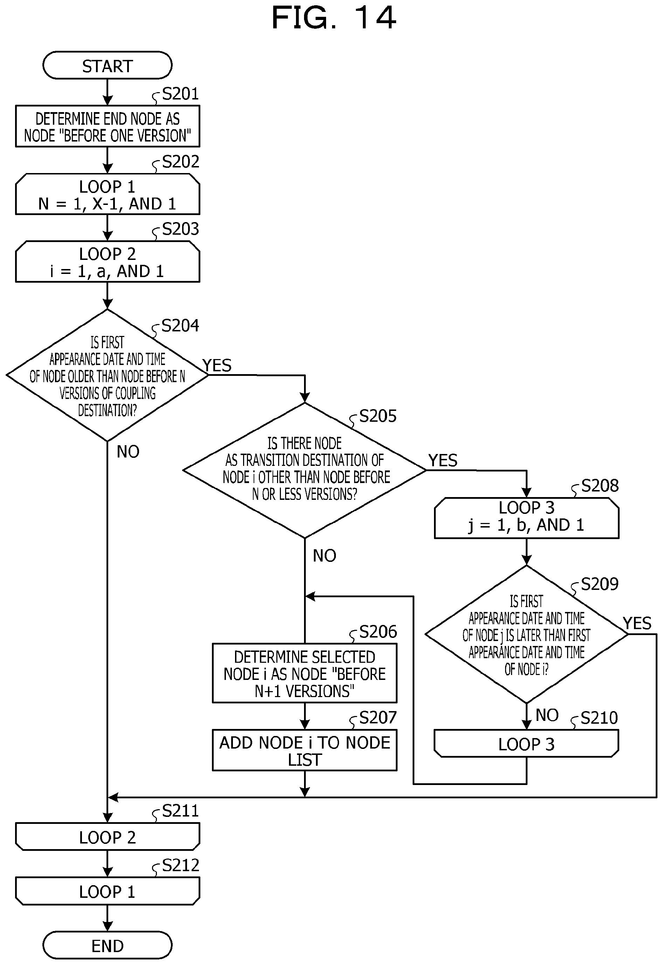

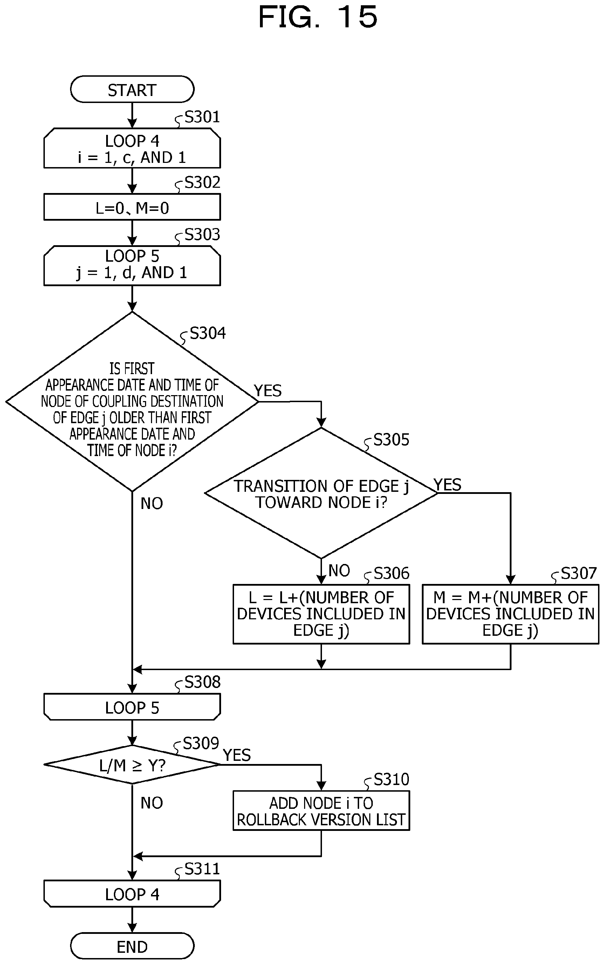

First, as described above, based on a log stored in the log storage unit 140a, the management apparatus 10 generates a directed-graph indicating a version transition of an execution file executed in the terminal 20, in the terminal 20 (step S101). Next, as described above, the management apparatus 10 combines the directed-graphs generated for each terminal 20 to generate a combined directed-graph (step S102). As described above, the management apparatus 10 specifies a hash value of the execution file of the version permitted to be used, based on the generated combined directed-graph (step S103). In step S103, the process illustrated in FIG. 14 or the process illustrated in FIG. 15 is executed. Next, as described above, the management apparatus 10 specifies a node including a hash value other than the hash value of the execution file of the version permitted to be used, and specifies the hash value included in this node as a hash value of an execution file of a version that is not permitted to be used (step S104). Based on the hash value of the execution file of the version that is not permitted to be used, the management apparatus 10 specifies the terminal 20 in which the execution file of the version that is not permitted to be used is installed (step S105), and displays the specified terminal 20 on the display unit 130 (step S106).

FIG. 14 is a flowchart illustrating a flow of a process of determining a node before X versions in a combined directed-graph in a case where versions permitted to be used are set to versions up to the version before X versions. First, the management apparatus 10 determines that an end node is a node "before one version" (step S201).

Next, the management apparatus 10 executes a process of repeating a loop 1 (steps S202 to S212). The process of repeating the loop 1 is a process of setting an initial value of a variable N to be repeated to 1, setting an increment value of N to 1, and performing the repeating until N becomes X-1.

During the process of the loop 1, the management apparatus 10 executes a process of repeating a loop 2 (steps S203 to S211). The process of repeating the loop 2 is a process of setting an initial value of a variable i to be repeated to 1, setting an increment value of i to 1, and performing the repeating until the variable i reaches the number a of undetermined nodes before, transitioning to a node before N versions. The management apparatus 10 sets a node selected from the undetermined nodes before in accordance with the variable i as a node i.

For the selected node i, the management apparatus 10 determines whether a first appearance date and time is older than a date and time of the node before N versions of a coupling destination (step S204). In a case where a first appearance date and time of the node i that transitions to the node before N versions is not a date and time older than the node before N versions of the coupling destination (No in step S204), the management apparatus 10 determines whether an end condition of the loop 2 is satisfied in step S211. In a case where the end condition of the loop 2 is not satisfied, the management apparatus 10 increments the variable i, and returns to step S204.

In a case where the first appearance date and time of the node i is older than the date and time of the node before N versions of the coupling destination (Yes in step S204), the management apparatus 10 determines whether there is a node that is a transition destination of the node i other than the node before N or less versions in the combined directed-graph (step S205).

In a case where there is no node of the transition destination of the node i other than the node before N or less versions in the combined directed-graph (No in step S205), the management apparatus 10 determines that the node i is a node "before N+1 versions" (step S206). Next, the management apparatus 10 adds the node i as a node including a hash value of a version permitted to be used to a node list (step S207). After step S207, the management apparatus 10 determines whether the end condition of the loop 2 is satisfied in step S211. In a case where the end condition of the loop 2 is not satisfied, the management apparatus 10 increments i, and returns to step S204.

In a case where there is a node that is a transition destination of the node i other than the node before N or less versions in the combined directed-graph (Yes in step S205), the management apparatus 10 executes a process of repeating a loop 3 (steps S208 to S210). The process of repeating the loop 3 is a process of setting an initial value of a variable j to be repeated to 1, setting an increment value of j to 1, and performing the repeating until variable j reaches the number b of nodes that are transition destinations of the node i other than the determined node before N or less versions. The management apparatus 10 sets, as a node j, a node selected in accordance with the variable j, from the nodes that are nodes other than the determined node before N or less versions and are transition destinations of the node i.

For the selected node j, the management apparatus 10 determines whether a first appearance date and time is a date and time later than the first appearance date and time of the node i (step S209). For the selected node j, in a case where a first appearance date and time is a date and time later than the first appearance date and time of the node i (Yes in step S209), the management apparatus 10 determines whether the end condition of the loop 2 is satisfied in step S211. In a case where the end condition of the loop 2 is not satisfied, the management apparatus 10 increments i, and returns to step S204.

For the selected node j, in a case where the first appearance date and time is not a date and time later than the first appearance date and time of the node i (No in step S209), the management apparatus 10 determines whether an end condition of the loop 3 is satisfied in step S210. In a case where the end condition of the loop 3 is not satisfied, the management apparatus 10 increments j, and returns to step S209.

In a case where the end condition of the loop 3 is satisfied, the management apparatus 10 executes the processes in steps S206 and S207 described above, and determines whether the end condition of the loop 2 is satisfied in step S211. In a case where the end condition of the loop 2 is not satisfied, the management apparatus 10 increments i, and returns to step S204.

In a case where the end condition of the loop 2 is satisfied, the management apparatus 10 determines whether an end condition of the loop 1 is satisfied in step S212. In a case where the end condition of the loop 1 is not satisfied, the management apparatus 10 increments N, and returns to step S203. In a case where the end condition of the loop 1 is satisfied, the management apparatus 10 ends the process of the loop 1.

For example, it is assumed that for the combined directed-graph GR1, the process illustrated in FIG. 14 with X = 2 is executed. In this case, as illustrated in FIGs. 10A to 10C, the nodes Nd4 and Nd5 may be determined as nodes before one version, the node Nd3 may be determined as a node before two versions, and a plurality of versions of the execution file may be set as versions permitted to be used.

FIG. 15 is a flowchart illustrating a flow of a process of determining a node of a rollback version in a combined directed-graph. The management apparatus 10 executes a process of repeating a loop 4 (steps S301 to S311). The process of repeating the loop 4 is a process of setting an initial value of the variable i to be repeated to 1, setting an increment value of i to 1, and performing the repeating until the variable i reaches the number c of nodes in the combined directed-graph. In this repetitive process, the management apparatus 10 sets a node selected in accordance with the variable i as the node i.

Next, the management apparatus 10 initializes a variable L and a variable M to L = 0 and M = 0 (step S302).

Next, the management apparatus 10 executes a process of repeating a loop 5 in the process of the loop 4 (steps S303 to S308). The process of repeating the loop 5 is a process of setting an initial value of the variable j to be repeated to 1, setting an increment value of j to 1, and performing the repeating until the variable j reaches the number d of edges coupled to the node i. In this repetitive process, the management apparatus 10 sets, as an edge j, an edge selected in accordance with the variable j from the edges coupled to the node i.

For the selected edge j coupled to the node i, the management apparatus 10 determines whether a first appearance date and time of a node of a coupling destination is older than a first appearance date and time included in the node i (step S304). For the edge j, in a case where the first appearance date and time of the node of the coupling destination is not a date and time older than the first appearance date and time included in the node i (No in step S304), the management apparatus 10 determines whether an end condition of the loop 5 is satisfied in step S308. In a case where the end condition of the loop 5 is not satisfied, the management apparatus 10 increments j, and returns to step S304.

For the edge j, in a case where the first appearance date and time of the node of the coupling destination is older than the first appearance date and time included in the node i (Yes in step S304), the management apparatus 10 determines whether the edge j transitions toward the node i (step S305). In a case where the edge j does not transition toward the node i (No in step S305), the management apparatus 10 sets L = L+ (the number of terminals 20 included in the edge j) (step S306). In a case where the edge j transitions toward the node i (Yes in step S305), the management apparatus 10 sets M = M+ (the number of terminals 20 included in the edge j) (step S307).

After steps S306 and S307, the management apparatus 10 determines whether the end condition of the loop 5 is satisfied in step S308. In a case where the end condition of the loop 5 is not satisfied, the management apparatus 10 increments j, and returns to step S304.

In a case where the end condition of the loop 5 is satisfied, the management apparatus 10 determines whether the condition is L/M ≥ Y. Y is a threshold value for determining rollback. For a case of L/M ≥ Y (Yes in step S309), the management apparatus 10 sets the node i as a rollback version node, and adds the node i to a rollback list (step S310).

In a case where L/M ≥ Y is not satisfied (No in step S309) or after step S310, the management apparatus 10 determines whether an end condition of the loop 4 is satisfied. In a case where the end condition of the loop 4 is not satisfied, the management apparatus 10 increments i, and returns to step S302. In a case where the end condition of the loop 4 is satisfied, the management apparatus 10 ends the process of the loop 4.

Even in a case where rollback is performed at the terminal 20, according to the process in FIG. 15, the rollback version node may be specified as illustrated in FIGs. 12A and 12B, and the end node may be specified from the specified rollback version node.

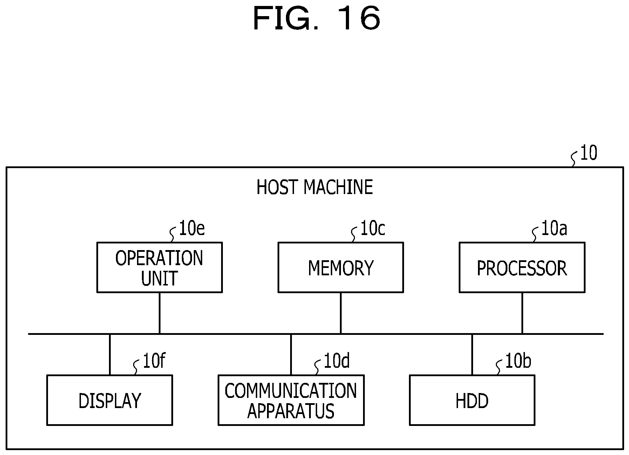

FIG. 16 is a diagram for explaining an example of a hardware configuration of the management apparatus 10. As illustrated in FIG. 16, the management apparatus 10 includes a processor 10a, a hard disk drive (HDD) 10b, a memory 10c, a communication apparatus 10d, an operation unit 10e, and a display 10f. The respective units illustrated in FIG. 16 are coupled to one another by a bus or the like.

The communication apparatus 10d is a network interface card or the like, corresponds to the communication unit 110 illustrated in FIG. 1, and communicates with other devices. For example, the operation unit 10e corresponds to the input unit 120, and corresponds to a keyboard, a mouse, a touch panel, or the like. For example, the display 10f corresponds to the display unit 130, and corresponds to a liquid crystal display or a touch panel. The HDD 10b corresponds to the storage unit 140, and stores a program for operating the functions illustrated in FIG. 1 or a log, various types of information, and the like.

The processor 10a operates a process of executing the functions described in FIG. 1 or the like by reading the program that executes a process in the same manner as the process performed by each processing unit illustrated in FIG. 1 from the HDD 10b or the like and loading the program into the memory 10c. For example, this process executes a function in the same manner as the function of each processing unit included in the management apparatus 10. For example, the processor 10a reads a program having the same functions as the functions of the log acquisition unit 150a, the version specifying unit 150b, the terminal specifying unit 150c, the output unit 150d, and the like from the HDD 10b or the like. The processor 10a executes a process of executing the same process as the processes of the log acquisition unit 150a, the version specifying unit 150b, the terminal specifying unit 150c, the output unit 150d, and the like.

As described above, the management apparatus 10 is operated as an information processing apparatus that executes an information processing method by reading and executing the programs. The management apparatus 10 may also implement the same functions as the functions of the embodiment described above by reading the program from a recording medium with a medium reading apparatus and executing the above read program. The program described in other embodiments is not limited to the program executed by the management apparatus 10. For example, even in a case where another computer or another server executes a program or a case where the computer and the server execute a program in cooperation with each other, the present disclosure may be applied in the same manner.

This program may be distributed via a network such as the Internet. The programs may be recorded on a computer-readable recording medium such as a hard disk, a flexible disk (FD), a compact disc read-only memory (CD-ROM), a magneto-optical (MO) disk, or a Digital Versatile Disc (DVD), and may be executed by being read out from the recording medium by the computer.

## Claims

1. An information processing program that causes at least one computer to execute a process, the process comprising:
acquiring a log including a path of an execution file of an application installed in a terminal, an execution time of the execution file, and a hash value of the execution file executed at the execution time, from a plurality of terminals;
specifying a time-series transition of the hash value of the same execution file based on the log for each of the plurality of terminals; and
specifying a revision target of the execution file based on the time-series transition of the hash value between the plurality of terminals.

2. The information processing program, according to claim 1, wherein the specifying the revision target includes specifying the revision target of the execution file based on a permitted hash value designated not to be revised and an unpermitted hash value designated to be revised.

3. The information processing program according to claim 2, wherein the specifying the revision target includes:
generating a directed-graph representing a time-series change of the hash values for each of the plurality of terminals; and
specifying the revision target of the execution file based on the directed-graph.

4. The information processing program according to claim 3, wherein the specifying the revision target includes:
generating a combined directed-graph by combining the directed-graphs generated for each of the plurality of terminals; and
specifying the revision target of the execution file based on the combined directed-graph.

5. The information processing program according to claim 4, wherein the specifying the revision target includes:
specifying a version of a hash value included in a node other than an end node of the combined directed-graph as the revision target; and
extracting a terminal in which an execution file of a version of the revision target is installed as a terminal in which an execution file of an unpermitted version is installed.

6. The information processing program according to claim 4, wherein the specifying the revision target includes:
specifying a first appearance time of the hash value included in a node of the combined directed-graph;
specifying a version of a hash value included in a node of which the first appearance time is equal to or later than a certain time as a permitted version target of the execution file; and
specifying a version of a hash value included in a node of which the first appearance time is earlier than the certain time as the revision target of the execution file.

7. The information processing program according to claim 4, wherein the specifying the revision target includes specifying a version of a hash value included in a node on a root node side from a certain number of nodes from an end node toward the root node in the combined directed-graph as the revision target of the execution file.

8. The information processing program according to any one of claims 1 to 7, wherein
the specifying the revision target includes:
specifying a rollback version of the execution file based on the number of terminals updated to a later version in a time-series and the number of terminals returned to a previous version in the time-series; and
specifying the revision target of the execution file by excluding the rollback version.

9. The information processing program according to any one of claims 1 to 8, wherein
the specifying of the revision target includes:
specifying a terminal in which an execution file of a version of the revision target is installed among the plurality of terminals; and
displaying information for uniquely identifying the specified terminal.

10. An information processing method for a computer to execute a process comprising:
acquiring a log including a path of an execution file of an application installed in a terminal, an execution time of the execution file, and a hash value of the execution file executed at the execution time, from a plurality of terminals;
specifying a time-series transition of the hash value of the same execution file based on the log for each of the plurality of terminals; and
specifying a revision target of the execution file based on the time-series transition of the hash value between the plurality of terminals.

11. An information processing apparatus comprising:
an acquisition unit that acquires a log including a path of an execution file of an application installed in a terminal, an execution time of the execution file, and a hash value of the execution file executed at the execution time, from a plurality of terminals; and
a specification unit that
specifies a time-series transition of the hash value of the same execution file based on the log for each of the plurality of terminals, and
specifies a revision target of the execution file based on the time-series transition of the hash value between the plurality of terminals.
